# EUROPEAN PATENT SPECIFICATION

(11) **EP 2 350 588 B1**
(45) Date of publication and mention of the grant of the patent: **03.12.2014**
(21) Application number: 09748016.4
(22) Date of filing: 08.10.2009
(51) Int. Cl.: G01K 15/00

(54) **A CALIBRATION APPARATUS**
KALIBRATIONSVORRICHTUNG
APPAREIL D'ÉTALONNAGE

(30) Priority: 10.10.2008 DK 200801426; 27.10.2008 US 258845
(43) Date of publication of application: 03.08.2011
(73) Proprietor: Ametek Denmark A/S, 3450 Allerod (DK)
(72) Inventor: HARSLUND, Jan Haakon, DK-3550 Slangerup (DK)
(74) Representative: Zacco Denmark A/S
(86) International application number: PCT/DK2009/050268
(87) International publication number: WO 2010/040360

(56) References cited:
- GB-A- 2 435 691
- NL-A- 8 500 802
- US-A- 6 007 239

## Description

The invention relates to a calibration apparatus for temperature probes comprising a calibration chamber with an opening for receiving an insert having passages for receiving temperature probes for controlling the distribution of heat in the chamber, where the chamber has several heat energy elements, and wherein the apparatus has temperature probes and electric circuits for controlling the heat energy elements.

Such calibration apparatus is known eg from WO 99/04231. Such apparatuses are used for calibrating temperature probes with an accuracy that may be down to 0.01°. Due to the high degree of accuracy there is a number of sources of error, some of which have already been remedied by the prior art. One of the major problems originates in heat being conveyed away from the calibration chamber near the opening. On the one hand due to it not being possible to arrange any heating element in the opening where the insert is to be introduced and, on the other, due to the temperature probe(s) that are arranged in the passages entailing an uncontrollable discharge of heat (or cold), also in case eg the heating elements in the calibration chamber can be controlled for achieving a very precise temperature. The thermal energy from the heating elements is to propagate through the insert, where temperature probes are disposed in some of the passages, but maybe not in all of them; and wherein each of the temperature probes discharges a certain amount of thermal energy to the effect that, precisely where the temperature probe to be calibrated is disposed, the temperature is not at all the same as the temperature of the heating elements. It is a further problem that the transfer of heat from the calibration chamber to the insert is not well-defined. The use of several heat energy elements is a known method of reducing the undesired and unknown temperature gradients, but so far it has been possible to control only the temperature immediately around the heat energy elements.

NL 8500802 discloses a resistive thermometer that is inserted into a block and used to provide temperature feedback to an electronic control circuit.

US 6007239 discloses a calibration apparatus or comparators for testing temperature-sensing probes at elevated and reduced temperatures.

GB 2435691 discloses a temperature varying low-temperature comparative calibration device including a vacuum jacket, a comparative calibration block, in the vacuum jacket, which is formed of a material of a high heat conductivity (eg.copper) and which is maintained at a fixed temperature by a refrigerator or a heater. A reference thermometer housing portion in the comparative calibration block has a reference thermometer mounted therein, and an insertion hole in the comparative calibration block through which a calibration target thermometer is inserted from outside the vacuum jacket via an introduction pipe. The introduction pipe is filled with heat exchange gas.

The object of the invention is to provide a calibration apparatus whereby improved accuracy can be obtained in the calibration of a temperature probe than has been possible so far.

This object is achieved by the apparatus defined in independent claim 1 in that the temperature probes comprise at least two external temperature sensors that are disposed at dissimilar distances from an opening in the insert.

Thereby a temperature gradient immediately proximate to the temperature probe(s) disposed in the passages of the insert can be measured.

One single sensor can be arranged In each temperature probe, and therefore there has to be a passage in the insert for each of the temperature probes.

By another embodiment, two temperature sensors can be provided in an external probe, where the sensors are arranged at a certain mutual distance in the longitudinal direction of the probe. By this embodiment the insert comprises a relatively long passage for receiving such external temperature probe.

By a preferred embodiment, two series-connected sensors in an external temperature probe can also be provided, and they are connected to the electric control circuits for controlling the heat energy elements.

Three or more sensors may also be provided in one single or more external temperature probes, whereby it is possible to control the temperature very accurately according to any need.

Usually, it is preferred to use separate external temperature probes that can be introduced into a passage in the insert, but it will be understood that the invention also covers the option that the calibration chamber is coherent with one or more temperature probes that can extend into a passage in the insert.

The heat energy elements can be electric heating elements and/or cooling elements, and eg Peltier-elements can be used that can be switched by purely electric means between being heating and cooling elements.

The invention also enables completely new options for electronic control and electronic storage of the course of the temperature in the insert, depending on the heat discharge from the calibration chamber.

The invention will now be explained in further detail with reference to the following description of an embodiment, reference being made to the drawing, wherein
Figure 1 shows an exploded, perspective view of a known heating chamber;
Figure 2 shows a sectional view through such heating chamber, but changed to show an embodiment of the invention;
Figure 3 shows a sectional view through another embodiment of the invention;
Figure 4 shows a principle sketch for controlling the calibration apparatus according to the invention, while
Figure 5 shows curves for illustrating the effect of the invention;

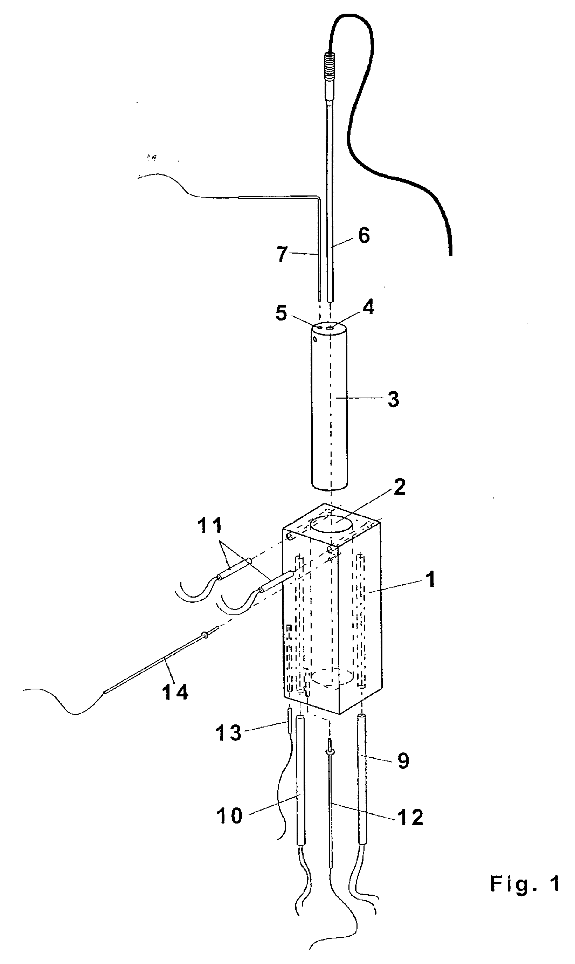

Figure 1 shows a calibration chamber 1 which is typically an elongate, upright chamber with an opening 2 at the top for receiving an insert 3. The invention is not limited to precisely that configuration of the calibration apparatus, but the example will be applied in the following.

The insert 3 also has openings 4 and 5 for receiving a temperature probe 6 and a temperature probe 7, respectively.

Also, the calibration chamber 1 has a number of holes for receiving electric heating elements 9-11 and various temperature probes 12-14 that are connected to electric control circuits that regulate the power supply to the heating elements. It is noted that cooling elements may also be provided for calibrating temperature probes at low temperatures.

Typically several types of inserts 3 are provided with a larger or smaller number of holes of varying size for receiving several sizes of probes 6, optionally several probes at a time. This means that the discharge of thermal energy from the calibration chamber depends very strongly on the type of insert that has been mounted in the calibration chamber, and which and how many probes 6 that are introduced into the insert 3. In practice, this will make it difficult to regulate the temperature very accurately at the temperature probe 6. Often, a full calibration curve is made for a temperature probe and a certain temperature interval, and therefore time does not allow too protracted temperature setting.

By the prior art, the probe 13 is used for determining the temperature of the calibration chamber, while probes 12 and 14 are used to regulate the difference in temperature between top and bottom of the calibration chamber. In attempts to improve the measurement accuracy and the regulation speed, it is also known to dispose a temperature probe 7 in the insert 3 such that an input from that probe is able to reduce the temperature errors that occur by use of only the temperature probes 12-14.

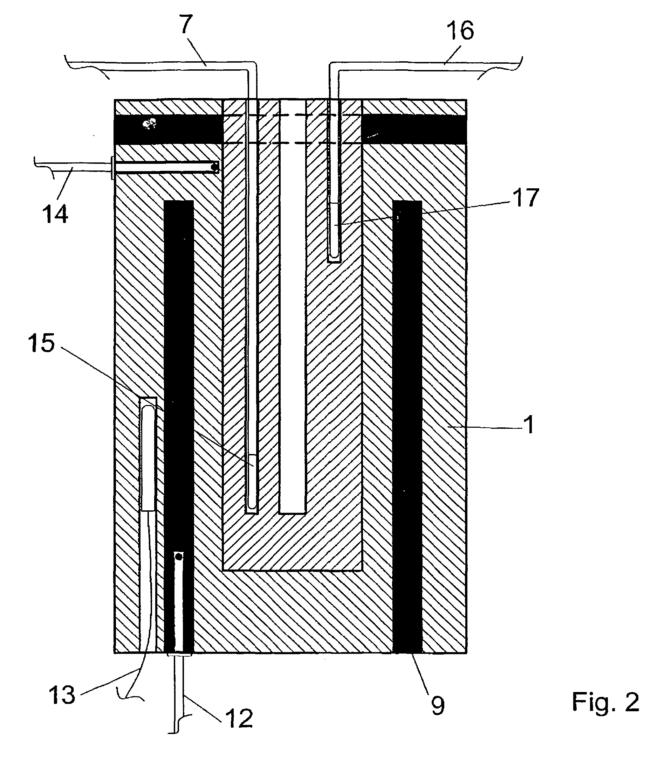

Figure 2 shows a section through a calibration apparatus according to the invention, where the parts that were already explained in the context of figure 1 is shown by same reference numerals. According to the invention, the insert as such comprises at least two separate temperature sensors that are arranged at dissimilar distances from the heating elements 11 at the top of the heating chamber 1. By the embodiment shown in figure 2, the one sensor is the sensor 15 in the probe 7, while another external probe 16 is provided that has a sensor 17. As explained above, it is difficult to control the temperature at the top of the calibration chamber due to the varying thermal load from the top of the insert 3 to the effect that, throughout, the insert has the same temperature. By being now, in accordance with the invention, able to measure the difference between the sensors 15 and 17, it is possible to obtain improved regulation for maintaining a predetermined temperature, but also an improved regulation for achieving the temperature, the development in the difference in temperature between sensors 15 and 17 being usable for providing a far more efficient regulation of the heating elements, in particular the heating elements at the top 11.

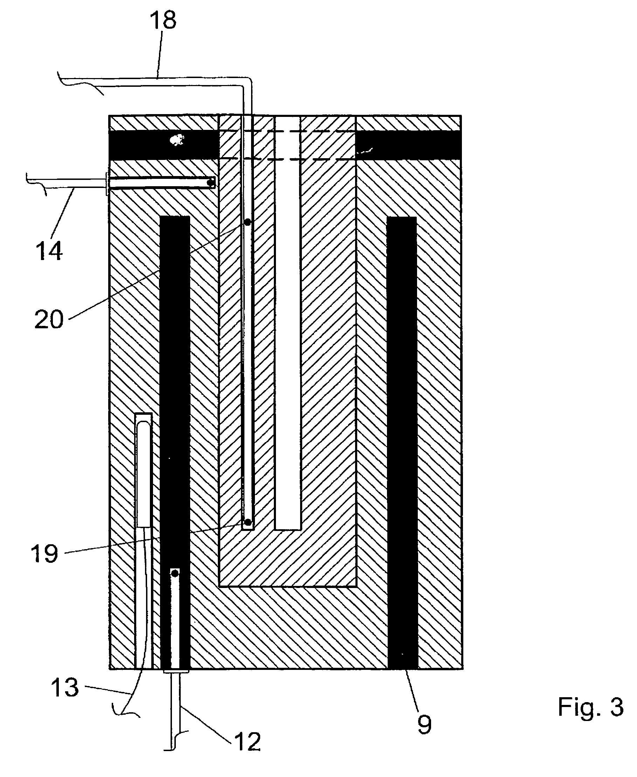

Figure 3 shows an alternative embodiment of the invention, an external probe 18 being used here that accommodates two sensors 19, 20 that are, according to the invention, also disposed at dissimilar distances from the heating elements at the top of the calibration chamber. By a preferred embodiment, the sensors 19 and 20 are connected in series to the effect that the difference of potential or the electric resistance is taken to express the difference in temperature between the sensors. Thus, it will be understood that many variations are possible when it comes to disposing external probes in accordance with the invention in the insert. Likewise, it will be understood that it is not necessary that the external probe(s) is/are introduced form the exterior into a passage in the insert. It is also conceivable that an external one may extend upwards from the bottom of the calibration chamber and that the insert has a passage for receiving such probe.

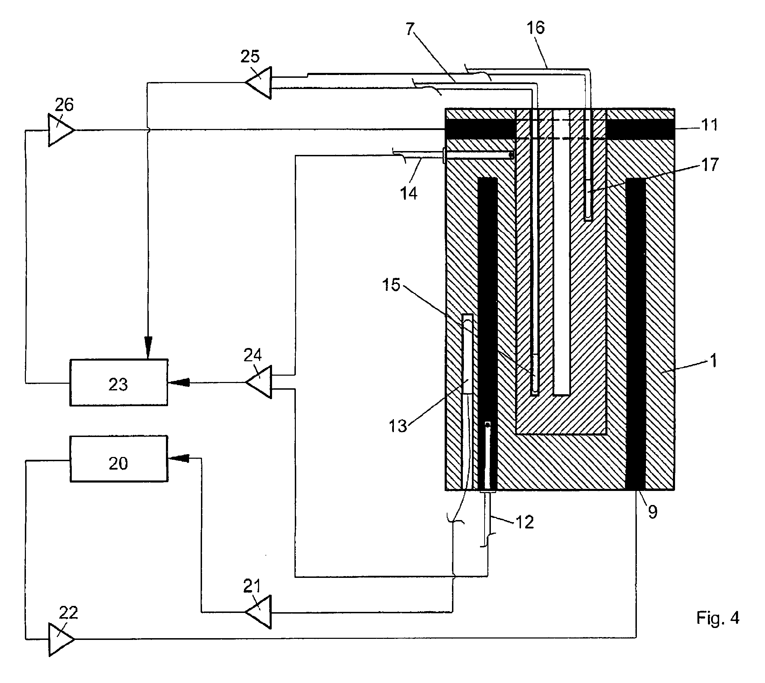

Figure 4 shows an example of a chart for controlling the calibration apparatus according to the invention.

In a known manner, a first regulator unit 20 controls the basic energy supply to the calibration chamber, the probe 13 emitting a signal via a measurement unit 21. A power regulation unit 22 regulates the power supply to the heating element 9.

Moreover, another regulator unit 23 is provided which - also in a manner known per se - regulates the power supply to the heating element 11. This is accomplished by the difference in temperature between the probes 13 and 14 being measured by means of a measurement unit 24, following which the regulator unit 23 controls a power regulation unit 26.

According to the invention, both the temperature sensor 15 and the temperature sensor 17 are provided, and the difference in temperatures is found by means of the measurement unit 25. Thereby it is possible to adjust the power supply to the heating body 11 at different temperatures and different loads to the effect that the temperature gradient in the insert 3 becomes independent of the thermal load from temperature probes 6 and 7. For instance, the regulator units 20 and 23 may be configured for storing tables showing how the fastest heating to an exact temperature is accomplished in the context of various thermal loads deriving from the probes 6 and 7 in the insert 3. That information may also be used to insert a temperature offset between temperature probes 12 and 14.

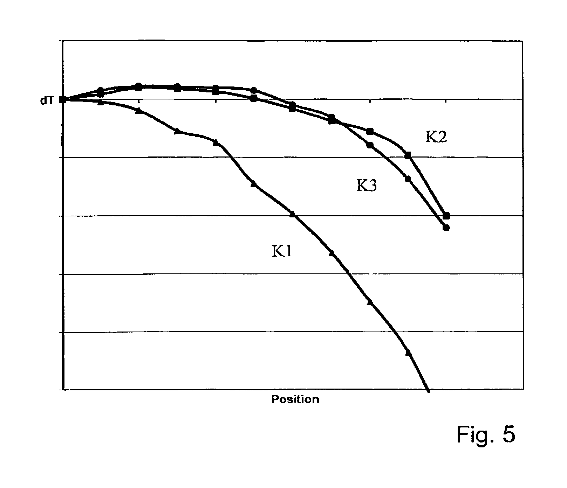

Figure 5 shows a number of curves that illustrate the effect of the invention.

The temperature T represents the ideal temperature that should preferably prevail throughout the entire insert. However, the curve K1 shows that this is not the case in practice when the insert is subject to thermal load by a temperature probe. The temperature drops largely evenly from the bottom of the insert and towards its top. Curves K2 and K3 show the temperature distribution in the insert by a calibration apparatus according to the invention. K2 shows the temperature distribution without thermal load, eg from the temperature probe that is to be calibrated, while K3 shows how the heat is distributed in the longitudinal direction of the insert when the insert is loaded by a temperature probe.

## Claims

1. A calibration apparatus for calibrating temperature probes (6), the calibration apparatus comprising:
- an elongate calibration chamber (1), the elongate calibration chamber (1) comprising an opening (2) for receiving an insert (3),
- several types of inserts (3) that are provided with a larger or smaller number of holes of varying size for receiving several sizes of temperature probes (6) to be calibrated, optionally several probes at a time, and that may be mounted in the calibration chamber (1),
- wherein the chamber (1) has several heat energy elements (9, 10, 11) received in a number of holes of said chamber (1),
- wherein the apparatus has temperature probes (7, 12, 13, 14, 16, 18) connected to electric control circuits (20,23) that regulate the power supply to the heat energy elements (9, 10, 11)
- wherein an insert (3) mounted in the calibration chamber (1) has passages (4,5) for receiving temperature probes (6) to be calibrated and for receiving external temperature probes (7, 16, 18) for controlling the distribution of heat in the chamber (1),
**characterised in that**
the apparatus further comprises at least two external temperature sensors (15, 17, 19, 20) that are provided in said one or more external temperature probes (7, 16, 18) situated in the insert, wherein said at least two external temperature sensors (15, 17, 19, 20) are, seen in a longitudinal direction of the elongate calibration chamber, situated at dissimilar distances from an opening in the insert; and
that the electric control circuits (20,23) are configured for controlling the heat energy elements (9, 10, 11) in response to signals from said at least two external temperature sensors (15, 17, 19, 20).

2. An apparatus according to claim 1, **characterised in that** the temperature sensors (15, 17) are disposed each in its own external temperature probe (7, 16) which external temperature probes (7, 16) are disposed each in its own passage in the insert (3).

3. An apparatus according to claim 1 or 2, **characterised in that** two external temperature sensors (19, 20) are provided in one single external probe (18), where the external sensors (19, 20) are disposed at a certain distance from each other in the longitudinal direction of the external probe (18).

4. An apparatus according to claim 3, **characterised in that** the external temperature probe (18) comprises two series-connected external temperature sensors (19, 20) that have a mutual spacing in the longitudinal direction of the external temperature probe (18) and are connected to the electric control circuits for producing a control signal in response to the difference in temperature between the external temperature sensors (19, 20).

5. An apparatus according to claim 3, **characterised in that** three or more sensors are provided in each external temperature probe.

6. An apparatus according to claims 1-4, **characterised in that** one of the external temperature probes (7, 16, 18) extends upwards from the bottom of the calibration chamber (1) and that the insert has a passage for receiving such probe.

7. An apparatus according to claims 1-6, **characterised in that** the heat energy elements (9, 10, 11) are electric heating elements.

8. An apparatus according to claims 1-6, **characterised in that** the heat energy elements (9, 10, 11) are cooling elements.

9. An apparatus according to claim 7 or 8, **characterised in that** the heat energy elements (9, 10, 11) are Peltier-elements.

10. An apparatus according to claims 1-9, **characterised in that** the electric control circuits comprise a digital storage for storing the correlation between temperature gradients in different places in the insert (3) in response to a given discharge and supply of thermal energy to the heating elements (9, 10, 11); and that the temperature probes in the calibration chamber are configured for being offset-adjustable in response to the information in the storage.

## Patentansprüche

1. Kalibriervorrichtung zum Kalibrieren von Temperaturfühlern (6), wobei die Kalibriervorrichtung Folgendes umfasst:
- eine längliche Kalibrierkammer (1), wobei die längliche Kalibrierkammer (1) eine Öffnung (2) zum Aufnehmen eines Einsatzes (3) umfasst,
- mehrere Typen von Einsätzen (3), die mit einer größeren oder kleineren Anzahl von Löchern verschiedener Größe zum Aufnehmen von zu kalibrierenden Temperaturfühlern (6) in verschiedenen Größen, eventuell mehreren Fühlern auf einmal, versehen sind, und die in der Kalibierkammer (1) montiert sein können,
- wobei die Kammer (1) mehrere in einer Anzahl von Löchern der Kammer (1) aufgenommene Wärmeenergieelemente (9, 10, 11) aufweist,
- wobei die Vorrichtung Temperaturfühler (7, 12, 13, 14, 16, 18) aufweist, die mit elektrischen Steuerkreisen (20, 23), die die Stromversorgung zu den Wärmeenergieelementen (9, 10, 11) steuern, verbunden sind,
- wobei ein in der Kalibierkammer (1) montierter Einsatz (3) Durchgänge (4, 5) zum Aufnehmen von zu kalibrierenden Temperaturfühlern (6) und zum Aufnehmen von äußerlichen Temperaturfühlern (7, 16, 18) zum Steuern der Verteilung von Wärme in der Kammer (1) aufweist, **dadurch gekennzeichnet, dass**
die Vorrichtung weiter zumindest zwei äußerliche Temperatursensoren (15, 17, 19, 20) umfasst, die in dem einen oder mehreren im Einsatz angeordneten äußerlichen Temperaturfühlern (7, 16, 18) vorgesehen sind, wobei die zumindest zwei äußerlichen Temperatursensoren (15, 17, 19, 20), in einer Längsrichtung der länglichen Kalibierkammer gesehen, in verschiedenen Abständen von einer Öffnung im Einsatz angeordnet sind; und
dass die elektrischen Steuerkreise (20, 23) zum Steuern der Wärmeenergieelemente (9, 10, 11) als Reaktion auf Signale von den zumindest zwei äußerlichen Temperatursensoren (15, 17, 19, 20) eingerichtet sind.

2. Vorrichtung nach Anspruch 1, **dadurch gekennzeichnet, dass** die Temperatursensoren (15, 17) jeweils in seinem eigenen äußerlichen Temperaturfühler (7, 16) angeordnet sind, welche äußerlichen Temperaturfühler (7, 16) jeweils in seinem eigenen Durchgang im Einsatz (3) angeordnet sind.

3. Vorrichtung nach Anspruch 1 oder 2, **dadurch gekennzeichnet, dass** zwei äußerliche Temperatursensoren (19, 20) in einem einzelnen äußerlichen Fühler (18) vorgesehen sind, wobei die äußerlichen Sensoren (19, 20) in einem bestimmten Abstand voneinander in der Längsrichtung des äußerlichen Fühlers (18) angeordnet sind.

4. Vorrichtung nach Anspruch 3, **dadurch gekennzeichnet, dass** der äußerliche Temperaturfühler (18) zwei in Reihe geschaltete äußerliche Temperatursensoren (19, 20) umfasst, die in der Längsrichtung des äußerlichen Temperaturfühlers (18) zueinander beabstandet sind und zum Erzeugen eines Steuersignals als Reaktion auf den Temperaturunterschied zwischen den äußerlichen Temperatursensoren (19, 20) mit den elektrischen Steuerkreisen verbunden sind.

5. Vorrichtung nach Anspruch 3, **dadurch gekennzeichnet, dass** drei oder mehr Sensoren in jedem äußerlichen Temperaturfühler vorgesehen sind.

6. Vorrichtung nach Anspruch 1-4, **dadurch gekennzeichnet, dass** sich einer der äußerlichen Temperaturfühler (7, 16, 18) vom Boden der Kalibierkammer (1) nach oben erstreckt, und dass der Einsatz einen Durchgang zum Aufnehmen eines solchen Fühlers aufweist.

7. Vorrichtung nach Anspruch 1-6, **dadurch gekennzeichnet, dass** die Wärmeenergieelemente (9, 10, 11) elektrische Heizelemente sind.

8. Vorrichtung nach Anspruch 1-6, **dadurch gekennzeichnet, dass** die Wärmeenergieelemente (9, 10, 11) Kühlelemente sind.

9. Vorrichtung nach Anspruch 7 oder 8, **dadurch gekennzeichnet, dass** die Wärmeenergieelemente (9, 10, 11) Peltier-Elemente sind.

10. Vorrichtung nach Anspruch 1-9, **dadurch gekennzeichnet, dass** die elektrischen Steuerkreise einen digitalen Speicher zur Speicherung der Korrelation zwischen Temperaturgradienten an verschiedenen Stellen im Einsatz (3) als Reaktion auf eine gegebene Entladung und Versorgung von thermischer Energie zu den Heizelementen (9, 10, 11) umfassen; und dass die Temperaturfühler in der Kalibrierkammer dafür eingerichtet sind, offseteinstellbar als Reaktion auf die Information im Speicher zu sein.

## Revendications

1. Dispositif d'étalonnage pour étalonner des sondes de température (6), ledit dispositif d'étalonnage comprenant:
- une chambre d'étalonnage allongée (1), ladite chambre d'étalonnage allongée (1) comprenant une ouverture (2) pour recevoir une pièce d'insertion (3,)
- plusieurs types de pièces d'insertion (3) qui sont pourvues d'un nombre plus au moins grand de trous d'une taille variée pour recevoir des sondes de température (6) à étalonner, éventuellement plusieurs sondes à la fois, et qui peuvent être montées dans la chambre d'étalonnage (1),
- ladite chambre (1) ayant plusieurs éléments d'énergie thermique (9, 10, 11) reçus dans un nombre de trous de ladite chambre (1),
- ledit dispositif ayant des sondes de température (7, 12, 13, 14, 16, 18) reliées à des circuits de commande électriques (20, 23) réglant l'alimentation de puissance aux éléments d'énergie thermique (9, 10, 11),
- une pièce d'insertion (3) montée dans la chambre d'étalonnage (1) présentant des passages (4, 5) pour recevoir des sondes de température (6) à étalonner et pour recevoir des sondes de température extérieures (7, 16, 18) pour commander la distribution de chaleur dans la chambre (1), **caractérisé en ce que**
le dispositif en outre comprend au moins deux capteurs de température extérieurs (15, 17, 19, 20) qui sont pourvus dans lesdites une ou plusieurs sondes de température extérieures (7, 16, 18) arrangées dans la pièce d'insertion, lesdites au moins deux capteurs de température extérieurs (15, 17, 19, 20) sont, vus dans la direction longitudinale de la chambre d'étalonnage allongée, situés à des distances inégales d'une ouverture dans la pièce d'insertion; et
que les circuits de commande électrique (20, 23) sont configurés pour commander les éléments d'énergie thermique (9, 10, 11) en réponse à des signaux provenant desdits au moins deux capteurs de température extérieurs (15, 17, 19, 20).

2. Dispositif selon la revendication 1, **caractérisé en ce que** les capteurs de température (15, 17) sont disposés chacun dans sa propre sonde de température extérieure (7, 16), lesdites sondes de température extérieures (7, 16) étant disposées chacune dans son propre passage dans la pièce d'insertion (3).

3. Dispositif selon la revendication 1 ou 2, **caractérisé en ce que** deux capteurs de température extérieurs (19, 20) sont pourvus dans une seule sonde extérieure (18), lesdits capteurs extérieurs (19, 20) étant disposés à une certaine distance l'un de l'autre dans la direction longitudinale de la sonde extérieure (18).

4. Dispositif selon la revendication 3, **caractérisé en ce que** la sonde de température extérieure (18) comporte deux capteurs de température extérieurs montés en série (19, 20) qui ont un espacement mutuel dans la direction longitudinale de la sonde de température extérieure (18) et qui sont reliés à des circuits de commande électriques pour produire un signal de commande en réponse à la différence de température entre les capteurs de température (19, 20).

5. Dispositif selon la revendication 3, **caractérisé en ce que** trois ou plusieurs capteurs sont pourvus dans chaque sonde de température extérieure.

6. Dispositif selon les revendications 1 à 4, **caractérisé en ce que** l'une des sondes de température extérieures (7, 16, 18) s'étend vers le haut à partir de la partie inférieure de la chambre d'étalonnage (1) et que la pièce d'insertion présente un passage pour recevoir une telle sonde.

7. Dispositif selon les revendications 1 à 6, **caractérisé en ce que** les éléments d'énergie thermique (9, 10, 11) sont des éléments de chauffage électriques.

8. Dispositif selon les revendications 1 à 6, **caractérisé en ce que** les éléments d'énergie thermique (9, 10, 11) sont des éléments de refroidissement.

9. Dispositif selon la revendication 7 ou 8, **caractérisé en ce que** les éléments d'énergie thermique (9, 10, 11) sont des éléments Peltier.

10. Dispositif selon les revendications 1 à 9, **caractérisé en ce que** les circuits de commande électriques comprennent un stockage numérique pour stocker la corrélation entre les gradients de température en différents endroits dans la pièce d'insertion (3) en réponse à une décharge donnée et une alimentation donnée de l'énergie thermique aux éléments de chauffage (9, 10, 11); et que les sondes de température dans la chambre d'étalonnage sont configurées pour être réglables de décalage en réponse à l'information dans la mémoire.
